# FASCICULE DE BREVET EUROPEEN

(11) **EP 0 459 847 B1**
(45) Date de publication et mention de la délivrance du brevet: **21.12.1994**
(21) Numéro de dépôt: 91401132.5
(22) Date de dépôt: 29.04.1991
(51) Int. Cl.: F21V 21/10, F21V 21/26

(54) **Appareil d'éclairage et installation d'éclairage de la voie publique.**
Leuchte und Beleuchtungsanlage von Strassen.
Luminaire and lighting installation for streets.

(30) Priorité: 01.06.1990 FR 9006882
(43) Date de publication de la demande: 04.12.1991
(73) Titulaire: Société dite: JC DECAUX, F-92200 Neuilly (FR)
(72) Inventeur: Tellier, Daniel, F-78280 Guyancourt (FR); Starck, Philippe, F-78490 Montfort-l'Amaury (FR)
(74) Mandataire: Rodhain, Claude

(56) Documents cités:
- DE-A- 2 319 877
- DE-A- 3 310 213
- DE-C- 300 324
- FR-A- 1 365 409
- GB-A- 624 178
- US-A- 1 781 372
- US-A- 3 949 218

## Description

La présente invention concerne un appareil d'éclairage.

L'invention a plus particulièrement pour objet un appareil pour l'éclairage de la voie publique du type comportant un poteau ou mât sensiblement vertical qui se prolonge à sa partie supérieure par au moins un bras transversal ou traverse à l'extrémité libre duquel est fixé un dispositif d'éclairage.

Les appareils d'éclairage de ce type également appelés lampadaires sont le plus souvent réalisés en une seule pièce, le dispositif d'éclairage ou luminaire étant articulé sur l'extrémité libre du bras.

On connaît également, par exemple par le document DE-A-300 324, des appareils d'éclairage de la voie publique, comportant un poteau ayant un axe longitudinal sensiblement vertical et portant un bras transversal solidarisé au poteau en étant monté mobile en rotation autour d'un autre axe contenu dans un plan vertical, un dispositif d'éclairage étant fixé à l'extrémité libre du bras. Cet agencement permet, par une action manuelle extérieure au poteau et au bras, de modifier l'emplacement du dispositif d'éclairage soit pour changer les conditions d'éclairage soit pour entretenir ou/et remplacer différents organes de ce dispositif.

La présente invention a pour but de proposer un appareil d'éclairage du type mentionné plus haut qui permet de faire varier à volonté les conditions d'éclairage de la voie publique en modifiant la position dans l'espace, et notamment en hauteur, du luminaire du lampadaire ainsi que de faciliter l'entretien et le replacement éventuel des lampes des luminaires, tout cela dans une manière plus efficace que selon la proposition citée ci-dessus.

Dans ce but l'invention propose un appareil d'éclairage, pour éclairer notamment des voies publiques, comportant un poteau ayant un axe longitudinal sensiblement vertical et prolongé à sa partie supérieure par au moins un bras transversal solidarisé au poteau en étant monté à rotation autour d'un autre axe contenu dans un même plan vertical que ledit axe longitudinal en faisant avec celui-ci un premier angle, un dispositif d'éclairage étant fixé à l'extrémité libre du bras, appareil caractérisé en ce que le bras est monté à rotation sur l'extrémité supérieure du poteau, et en ce qu'il comporte un dispositif d'actionnement en rotation du bras autour dudit axe de rotation, comprenant un organe moteur rotatif muni d'un arbre de sortie, un arbre d'entraînement du bras lié à ce dernier en rotation, et une transmission pour transmettre le mouvement de l'arbre moteur à l'arbre d'entraînement.

L'invention propose également une installation d'éclairage de la voie publique comportant plusieurs appareils d'éclairage réalisés selon les enseignements de l'invention et caractérisée en ce qu'elle comporte des moyens pour commander simultanément lesdits dispositifs d'actionnement en rotation.

D'autres caractéristiques et avantages apparaîtront à la lecture de la description détaillée qui va suivre, donnée à titre d'exemple non limitatif, pour la compréhension de laquelle on se reportera aux dessins annexés dans lesquels :
- la figure 1 est une vue schématique d'un lampadaire selon l'état de la technique ;
- la figure 2 est une vue schématique illustrant le principe de l'évolution vers un lampadaire selon I'invention ;
- la figure 3 est une vue schématique en coupe longitudinale axiale de la partie supérieure d'un lampadaire à deux bras réalisé sur la base du principe du lampadaire de la figure 2 ;
- la figure 4 est une vue en section longitudinale axiale, selon la ligne 4-4 de la figure 5, d'une forme pratique de réalisation du poteau du lampadaire de la figure 3, et qui illustre le dispositif d'actionnement du déploiement des bras ;
- la figure 5 est une vue en section selon la ligne 5-5 de la figure 4 ;
- la figure 6 est un schéma illustrant une autre forme pratique de réalisation d'un lampadaire réalisé sur la base du principe du lampadaire de la figure 2, à un bras articulé ;
- les figures 7 et 8 sont deux schémas montrant, à la suite d'une nouvelle évolution, l'aboutissement au lampadaire selon l'invention ; et
- la figure 9 est une vue en section qui illustre les moyens d'articulation et d'entraînement en rotation du bras du lampadaire selon l'invention des figures 7 et 8.

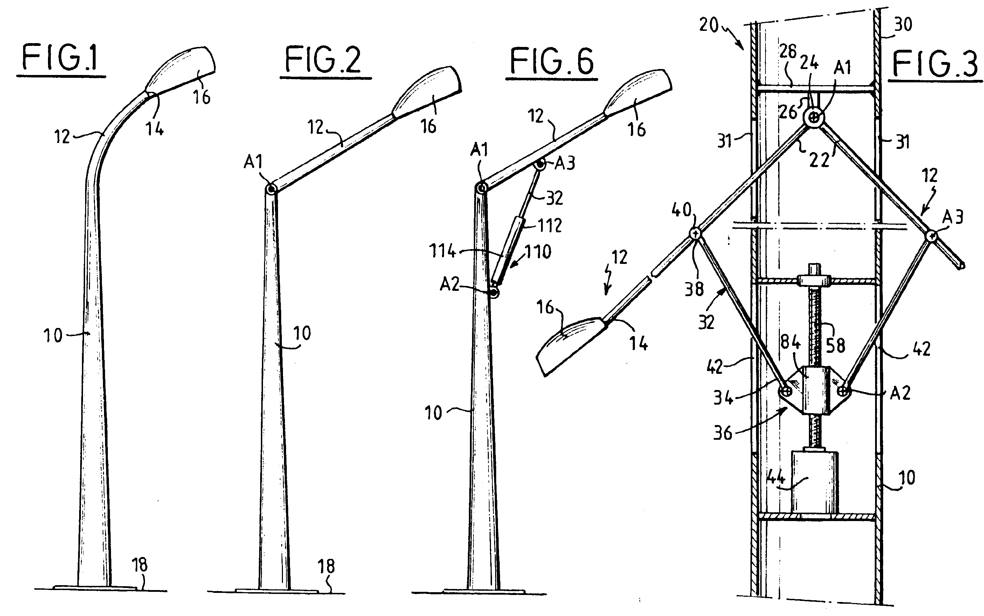

On reconnaît à la figure 1 un lampadaire d'éclairage de la voie publique du type comportant un candélabre constitué par une première partie en forme de poteau ou mât vertical 10 qui se prolonge à sa partie supérieure par une seconde partie en forme de bras transversal incliné 12.

L'extrémité libre 14 du bras transversal 12 porte un luminaire 16 qui est éventuellement articulé sur cette extrémité libre.

Ce type de lampadaire est fixe et rigide et il ne permet pas de faire varier l'éclairage au sol 18 ni de procéder à des opérations d'entretien du luminaire 16 autrement qu'à l'aide d'un dispositif télescopique à nacelle ou à l'aide d'une échelle de grande dimension.

La figure 2 illustre le principe de l'évolution vers un lampadaire selon l'invention.

Selon ce principe, le bras transversal 12 est articulé sur le poteau vertical 10 autour d'un premier axe géométrique d'articulation A1 qui est horizontal, le lampadaire comportant un dispositif d'actionnement du pivotement du bras 12 autour de son axe A1 (non représenté) pour permettre de faire varier la position dans l'espace du luminaire 16 et notamment son altitude par rapport à la chaussée 18.

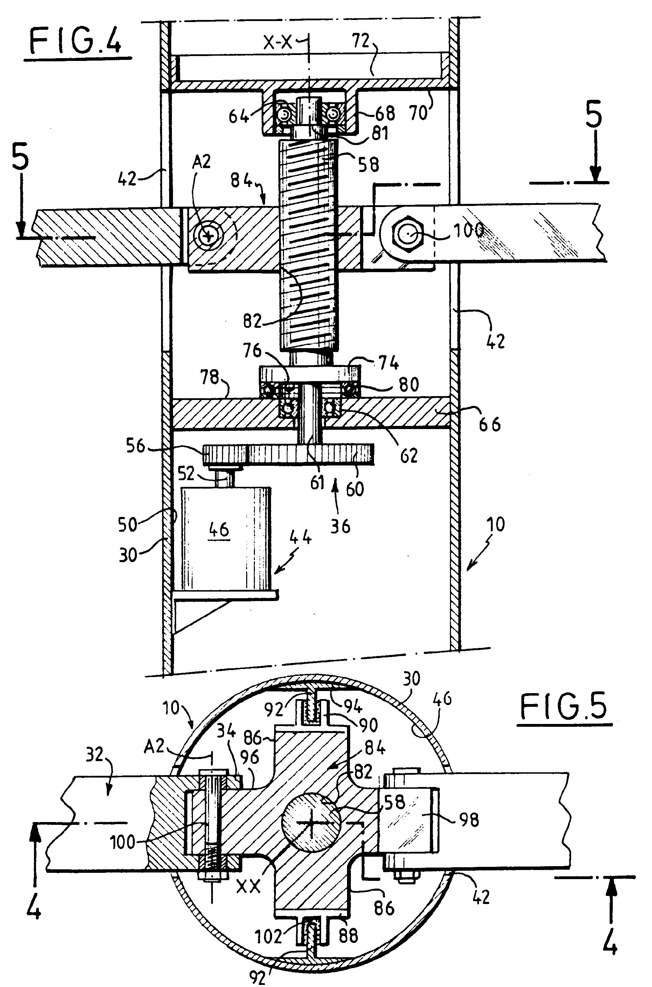

Dans les modes de réalisation représentés aux figures 3 à 5, du principe de la figure 2, le poteau 10 est un poteau creux.

Chaque bras 12 est articulé au voisinage de son extrémité 22 opposée à son extrémité libre 14 à l'intérieur du fût constituant le poteau creux 10 autour d'un axe horizontal géométrique commun A1.

L'articulation des extrémités 22 peut par exemple être réalisée de manière classique par un montage en chape autour d'un arbre 24 qui est fixé à l'extrémité supérieure d'un pied 26 lui-même soudé sur la face supérieure d'un plateau horizontal en forme de disque 28 soudé à l'intérieur du poteau.

La paroi 30 du fût du poteau comporte deux fentes axiales longitudinales opposées 31 qui permettent le passage des bras 12 et qui sont dimensionnées axialement en fonction de la valeur de l'angle de pivotement que l'on désire conférer au bras 12.

Chaque bras 12 est équipé d'une béquille de soutien et d'actionnement 32.

Les deux premières extrémités 34 des béquilles 32 sont reliées à un dispositif d'actionnement 36, situé à l'intérieur du fût du poteau 10, et sont articulées sur celui-ci autour d'axes géométriques d'articulation A2 qui sont parallèles au premier axe d'articulation A1.

Les secondes extrémités 38 des béquilles 32 sont reliées aux bras 12 auxquels elles sont fixées par des dispositifs d'articulation 40, par exemple du type à montage en chape, dont les axes géométriques A3 sont parallèles aux deuxièmes axes A2 et au premier axe A1.

La paroi 30 du fût 10 comporte une seconde paire de fentes longitudinales axiales opposées 42 qui permettent le passage et le pivotement des béquilles 32.

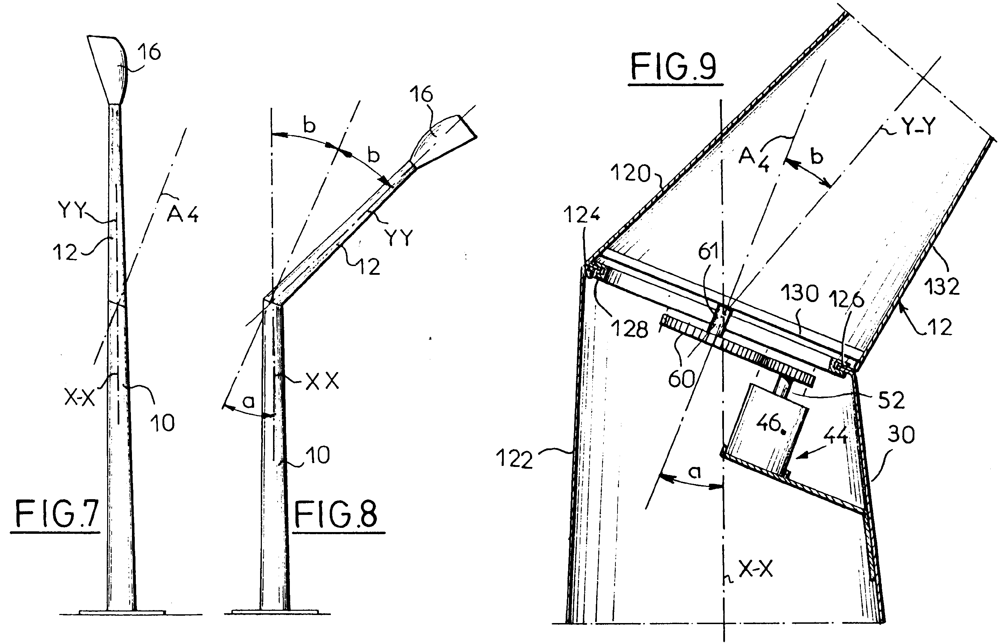

On décrira maintenant un mode de réalisation pratique du dispositif d'entraînement 36 tel qu'il est représenté aux figures 4 et 5.

Le dispositif 36 est un vérin du type à vis et écrou commandé par un moteur-frein électrique 44 dont le stator 46 est fixé à l'intérieur du poteau 10 au moyen d'une cornière 48 soudée sur la face interne 50 du fût 30.

L'arbre 52 du moteur 44 est équipé d'un pignon d'entraînement 56 qui entraîne la vis d'entraînement 58 par l'intermédiaire d'une couronne dentée 60 fixée à l'extrémité inférieure 61 de la vis.

La vis 58 est guidée en rotation autour de son axe, qui est coaxial à l'axe longitudinal X-X du fût 30, par deux roulements inférieur 62 et supérieur 64.

Le roulement inférieur 62 est monté dans un plateau radial interne 66 soudé dans le fût 30 et le roulement supérieur 64 est monté dans une virole 68 qui s'étend axialement depuis la face inférieure 70 d'un autre plateau radial interne 72 soudé dans le fût 30. Le corps de la vis 58 est équipé à sa face inférieure d'un épaulement radial 74 dont la face inférieure 76 prend appui axialement sur la face supérieure 78 du plateau inférieur 66 par l'intermédiaire d'une butée à billes 80.

Le corps de la vis 58 est également immobilisé en translation axiale par un épaulement supérieur 81 qui prend appui sur la bague intérieure du roulement supérieure 64.

Le filetage extérieur de la vis 58 coopère avec le filetage intérieur 82 d'un écrou 84.

L'écrou comporte deux bras radiaux de guidage 86 diamétralement opposés. L'extrémité libre 88 de chacun des bras radiaux 86 comporte un coulisseau de guidage en forme de fourche dont les branches parallèles 90 reçoivent en coulissement un rail de guidage 92 dont l'embase 94 est fixée sur la face interne 46 du fût 30.

Les rails 92 sont parallèles à l'axe X-X de la vis 58 et du fût 30 et assurent simultanément l'immobilisation en rotation de l'écrou 84 autour de son axe et son guidage en coulissement axial à l'intérieur du poteau 10.

L'écrou 84 comporte deux bras radiaux d'entraînement 96 qui sont diamétralement opposés et perpendiculaires aux bras de guidage 86.

L'extrémité libre 98 de chaque bras radial d'entraînement 96 reçoit la première extrémité 34 de la béquille 32 correspondante qui est articulée autour de son axe géométrique A2 au moyen d'un montage classique en chape avec un axe épaulé 100.

L'alimentation en énergie électrique du moteur 46 provoque l'entraînement en rotation dans l'un ou l'autre sens de la vis 58 et donc le déplacement en translation axiale vers le haut ou vers le bas de l'écrou 84.

Le guidage en coulissement de l'écrou 84 est facilité par l'interposition de patins en téflon 102 entre les branches 90 et les rails 92.

Le mouvement de translation de l'écrou 84 provoque un déplacement vertical simultané des premières extrémités 34 des béquilles 32 et donc la commande du pivotement des bras 12 autour de leur axe d'articulation A1 sous l'action des béquilles de soutien 32 qui font fonction de levier d'actionnement.

Dans le mode de réalisation schématisé à la figure 6, le dispositif d'actionnement est constitué par un vérin 110 dont le corps 112 est articulé à son extrémité inférieure autour d'un axe géométrique A2 directement sur le poteau 10 et dont la tige peut être constituée par la béquille 32 proprement dite.

Le vérin 110 est par exemple un vérin hydraulique dont l'actionnement provoque l'allongement ou le raccourcissement de la distance séparant les axes A2 et A3 et donc le pivotement du bras 12 autour de l'axe A1.

Le maintien dans une position angulaire déterminée du bras 12 peut se faire par exemple en maintenant la pression à l'intérieur de la chambre de commande 114 du vérin 110.

On décrira maintenant un mode de réalisation de l'invention, représenté aux figures 7 à 9, qui est l'aboutissement d'une nouvelle évolution à partir des modes de réalisation décrits précédemment, les éléments correspondants étant désignés par les mêmes repères numériques.

L'axe d'articulation A4 du bras articulé 12 forme ici un premier angle aigu a par rapport à l'axe longitudinal vertical X-X du poteau 10. L'axe d'articulation A4 est également contenu dans un plan (le plan de la feuille en considérant les figures) contenant l'axe X-X du poteau.

L'axe longitudinal Y-Y du bras 12, et plus particulièrement l'axe longitudinal de l'extrémité inférieure 120 du bras 12 qui est articulée sur l'extrémité supérieure libre 122 du poteau 10, forme un second angle aigu b par rapport à son axe d'articulation A4 sur le poteau 10. L'axe d'articulation A4 est également contenu dans un plan contenant l'axe Y-Y du bras.

Dans une position déployée représentée aux figures 7 et 9, ou dans sa position repliée de la figure 8, les axes X-X, A4 et Y-Y sont tous contenus dans un même plan.

Dans le mode de réalisation préféré illustré aux figures, les angles aigus a et b sont égaux de manière que, en position déployée l'axe Y-Y du bras 12 forme un angle égal à 2a par rapport à l'axe vertical X-X du poteau 10 et que, en position repliée, les axes X-X et Y-Y soient confondus, le lampadaire ayant alors l'aspect d'un poteau vertical continu.

En se reportant à la figure 9, on voit que les extrémités en vis-à-vis 120 et 122 du bras 12 et du poteau 10 sont liées entre elles en rotation au moyen de bords radiaux internes, 124 et 126 respectivement, qui sont reçus dans une virole interne 128 à section en U.

Dans le poteau creux 10 on retrouve un moteur électrique rotatif 44, une transmission par pignons dentés 56 et 60, l'arbre 61 de ce dernier étant lié en rotation à un plateau radial interne 130 soudé à l'intérieur du fût 132 du bras creux 12.

L'alimentation du moteur 44 provoque l'entraînement en rotation du bras 12 autour de l'axe A4. Le passage de l'une à l'autre des positions illustrées aux figures 7 et 8 correspond à une rotation d'un demi-tour autour de l'axe d'articulation A4.

L'invention propose également de réaliser des installations d'éclairage public (non représentées) constituées d'une pluralité de lampadaires à bras articulés et motorisés selon l'invention et dont on assure la commande simultanée du déploiement.

En commandant simultanément, par exemple les moteurs électriques 44 ou les vérins hydrauliques 110, on obtient une concomitance parfaite des mouvements de pivotement des bras des différents lampadaires.

Une unité de commande centralisée peut par exemple être réalisée à l'aide d'un automate programmable qui provoque un mouvement croissant ou décroissant en montée ou en descente d'un alignement de lampadaires.

## Revendications

1. Appareil d'éclairage, pour éclairer notamment des voies publiques, comportant un poteau (10) ayant un axe longitudinal (X-X) sensiblement vertical et prolongé à sa partie supérieure par au moins un bras (12) transversal solidarisé au poteau en étant monté à rotation autour d'un autre axe contenu dans un même plan vertical que ledit axe longitudinal (X-X) en faisant avec celui-ci un premier angle (a), un dispositif d'éclairage étant fixé à l'extrémité libre (14) du bras, appareil caractérisé en ce que le bras est monté à rotation sur l'extrémité supérieure du poteau, et en ce qu'il comporte un dispositif d'actionnement en rotation du bras autour dudit axe de rotation, comprenant un organe moteur (46) rotatif muni d'un arbre de sortie (52), un arbre (61) d'entraînement du bras lié à ce dernier en rotation, et une transmission pour transmettre le mouvement de l'arbre moteur à l'arbre d'entraînement.

2. Appareil d'éclairage selon la revendication 1, caractérisé en ce que le bras (12) présente un axe longitudinal (Y-Y) formant un second angle (b) par rapport à son axe (A4) de rotation sur le poteau.

3. Appareil d'éclairage selon la revendication 2, caractérisé en ce que le premier angle (a) et le second angle (b) sont égaux.

4. Appareil d'éclairage selon la revendication 1, caractérisé en ce que le poteau (10) est creux et l'organe moteur (46) rotatif est monté à l'intérieur de ce poteau.

5. Installation d'éclairage de la voie publique comportant plusieurs appareils d'éclairage selon l'une des revendications 1 à 4, caractérisée en ce qu'elle comporte des moyens pour commander simultanément lesdits dispositifs d'actionnement en rotation.

## Patentansprüche

1. Leuchtvorrichtung zum Beleuchten insbesondere von Straßen, mit einem Masten (10), der eine im wesentlichen vertikale Längsachse (X-X) hat und an seinem oberen Teil durch zumindest einen Querarm (12) verlängert ist, der mit dem Masten verbunden ist, wobei dieser um eine andere, in der gleichen vertikalen Ebene wie der Längsachse (X-X) enthaltenen Achse, drehbar angebracht ist und mit dieser einen ersten Winkel (a) bildet, einer Beleuchtungseinrichtung, die an dem freien Ende (14) des Armes befestigt ist, dadurch gekennzeichnet, daß der Arm auf dem oberen Ende des Masten drehbar angebracht ist, und daß er eine Betätigungseinrichtung zur Drehung des Armes um die Drehachse aufweist, die ein rotierendes Antriebselement (46), das mit einer Abtriebswelle (52) versehen ist, wobei eine Antriebswelle (61) des Armes mit letzterer drehverbunden ist, und eine Übertragungseinrichtung zum Übertragen der Bewegung der Motorwelle auf die Antriebswelle umfaßt.

2. Leuchtvorrichtung nach Anspruch 1, dadurch gekennzeichnet, daß der Arm (12) eine Längsachse (Y-Y) aufweist, die einen zweiten Winkel (b) in bezug auf seine Drehachse (A4) um den Masten bildet.

3. Leuchtvorrichtung nach Anspruch 2, dadurch gekennzeichnet, daß der erste Winkel (a) und der zweite Winkel (b) gleich sind.

4. Leuchtvorrichtung nach Anspruch 1, dadurch gekennzeichnet, daß der Masten (10) hohl ist und das rotierende Antriebselement (46) im Inneren des Masten angebracht ist.

5. Beleuchtungsanlage für Straßen mit mehreren Leuchtvorrichtungen nach einem der Ansprüche 1-4, dadurch gekennzeichnet, daß sie Mittel zum gleichzeitigen Steuern der Vorrichtungen zur Drehbetätigung umfaßt.

## Claims

1. A lighting device, in particular for lighting public roads, comprising a post (10) having a substantially vertical longitudinal axis (X-X) and being extended in its upper part by at least one transverse arm (12) firmly fixed to the post while being rotatably mounted about another axis contained in the same vertical plane as the said longitudinal axis (X-X) and forming a first angle (a) therewith, a lighting unit being fixed to the free end (14) of the arm, the device being characterised in that the arm is rotatably mounted on the upper end of the post, and in that it comprises a device for rotationally actuating the arm about the said rotational axis, comprising a rotational motor device (46) provided with a driven shaft (52), a drive shaft (61) for the arm which is rotatably connected to the latter, and a transmission to transmit the movement of the driving shaft to the drive shaft.

2. A lighting device according to claim 1, characterised in that the arm (12) has a longitudinal axis (Y-Y) forming a second angle (b) with respect to its rotational axis (A4) on the post.

3. A lighting device according to claim 2, characterised in that the first angle (a) and the second angle (b) are equal.

4. A lighting device according to claim 1, characterised in that the post (10) is hollow and the rotational motor device (46) is mounted inside this post.

5. A lighting installation for public roads, comprising a plurality of lighting devices according to one of claims 1 to 4, characterised in that it comprises means for simultaneously controlling the said rotational actuating devices.
